Europäisches Patentamt

European Patent Office

Office européen des brevets

(11) Veröffentlichungsnummer: **0 302 185**
**A2**

# EUROPÄISCHE PATENTANMELDUNG

(21) Anmeldenummer: **88106997.5**

(22) Anmeldetag: **02.05.88**

(51) Int. Cl.⁴: **B29C 65/02 , B29C 65/34 , F16L 47/02 , //B29L23:22**

(30) Priorität: **06.08.87 DE 3726063**

(43) Veröffentlichungstag der Anmeldung:
**08.02.89 Patentblatt 89/06**

(84) Benannte Vertragsstaaten:
**AT BE CH DE ES FR GB GR IT LI NL SE**

(71) Anmelder: **KABELMETAL ELECTRO GMBH**
**Kabelkamp 20 Postfach 260**
**D-3000 Hannover 1(DE)**

(72) Erfinder: **Szczepanek, Werner**
**Hindemithweg 15**
**D-3203 Sarstedt(DE)**
Erfinder: **Knitter, Bodo**
**Dürerring 27**
**D-3160 Lehrte(DE)**
Erfinder: **Strumpen, Wolf-Dieter**
**Kurt-Schumacher-Allee 32**
**D-3012 Langenhagen(DE)**

(54) Anordnung zum Aufbringen des Drucks bei der Herstellung einer Schweissverbindung zwischen den Enden zweier Kunststoffrohre.

(57) Es wird eine Anordnung zum Aufbringen des für die Verschweißung von Kunststoffrohrenden mit einem umwickelten Kunststoffband (3) erforderlichen Drucks beschrieben. Die herzustellenden Schweißverbindungen werden mittels vorspannbarer Spannbänder (4,5,6) unter Druck gesetzt. Zwischen den Spannbändern (4,5 und 6) und dem Kunststoffband (3) befinden sich um das Kunststoffband (3) herumgeformte Metallbleche. Oberhalb der Überlappungsnaht des Kunststoffbandes (3) liegt ein Druckverteilungsblech (7).

Fig 1

EP 0 302 185 A2

## Anordnung zum Aufbringen des Drucks bei der Herstellung einer Schweißverbindung zwischen den Enden zweier Kunststoffrohre

Die Erfindung betrifft eine Anordnung zum Aufbringen des Druckes bei der Herstellung einer Schweißverbindung zwischen den Enden zweier Kunststoffrohre und einem um die Enden der Kunststoffrohre mit überlappenden Bandkanten herumgelegten Kunststoffband, bei der sowohl zwischen den Enden der Kunststoffrohre und dem Kunststoffband als auch zwischen den überlappenden Bandkanten Heizleiter zum Erwärmen der zu verschweißenden Kunststoffschichten vorgesehen sind, insbesondere zur Herstellung einer Verbindungsmuffe für Fernwärmeleitungen, bei welcher an der außenliegenden Oberfläche des um die Enden der Kunststoffrohre herumgelegten Kunststoffbandes in radialer Richtung eine Kraft auf die Schweißnähte ausübende Mittel vorgesehen sind.

Eine Muffenverbindung für Fernwärmeleitungen ist aus dem DE-GM 82 04 372 bekannt. Dort wird das Kunststoffband mittels einer speziell geformten Metallmanschette, welche sich über die gesamte Länge der Muffe erstreckt, und einer Schraubzwinge, deren Backen hinter Abkantungen der Metallmanschette greifen, gegen die zu verschweißenden Oberflächen gedrückt.

Der Nachteil dieser Vorgehensweise ist darin zu sehen, daß für jede Rohrabmessung eine gesonderte Metallmanschette vorgehalten werden muß. Ein weiterer Nachteil besteht darin, daß der Spannvorgang relativ langwierig ist. Eine Möglichkeit, den Anpreßdruck zu erfassen besteht nicht. Darüberhinaus besteht die Schwierigkeit, bei Durchmesserschwankungen den Druck exakt dort aufzubringen, wo er benötigt wird, nämlich im Bereich der Rundnaht.

Der vorliegenden Erfindung liegt die Aufgabe zugrunde, eine wesentlich verbesserte Lösung für das Aufbringen des Druckes anzugeben, durch welche die angeführten Nachteile beseitigt werden.

Diese Aufgabe wird dadurch gelöst, daß zumindest im Bereich der zwischen den Enden der Kunststoffrohre und des Kunststoffbandes gelegenen Heizleiter jeweils ein Spannband um das Kunststoffband herumgelegt ist, welches elastisch vorgespannt ist, daß zwischen den Spannbändern und dem Kunststoffband jeweils ein zum Ring mit überlappenden Endbereichen geformtes Metallblech angeordnet ist und daß oberhalb der Überlappungsnaht des Kunststoffbandes ein Druckverteilungsblech angeordnet ist, dessen Enden von den Spannbändern überdeckt sind.

Durch die Verwendung von mindestens zwei Spannbändern kann der Druck wesentlich besser auf die Schweißnähte übertragen werden. Durchmesserschwankungen wirken sich nicht mehr nachteilig aus. Durch die Vorspannung der Spannbänder bleibt der Druck auch noch aufrechterhalten, wenn die Schweißnaht nachgibt. Das zwischen dem Kunststoffband und den Spannbändern befindliche Metallblech dient dazu, den Druck gleichmäßig zu verteilen und eine Überhitzung der Spannbänder während des Schweißvorgangs zu verhindern. Die Spannbänder, die zweckmäßigerweise aus einem hochfesten biegbaren Kunststoffmaterial bestehen, können, wie aus der Verpackungstechnik bekannt, als verlorene Bänder aufgebracht werden oder aber Teil einer handelsüblichen Ratsche sein. In beiden Fällen ist eine Anpassung an den jeweiligen Muffendruchmesser ohne weiteres möglich. Dadurch, daß die Spannbänder mittels handelsüblicher Spannvorrichtungen bzw. Ratschen aufgebracht werden, kann der Spannvorgang wesentlich verkürzt werden. Das endseitig von den Spannbändern überdeckte Druckverteilungsblech liegt auf der Überlappungsnaht und bringt dort den erforderlichen Druck auf.

Nach einem weiteren Gedanken der Erfindung ist das Band ein zugfestes unelastisches Band, welches mittels einer Ratsche vorgespannt ist. Die elastisch verformbaren Elemente sind dann Teil der Ratsche, die während des Schweißvorganges bis zum Erkalten der Schweißnaht auf der Muffe verbleibt.

Die Ratsche besteht vorteilhafterweise aus einem Gehäuse, in welcher ein Bolzen gelagert ist, der in eine durch das Spannband an seinem Ende gebildete Öse eingreift. Das Spannband wird nach dem Herumführen um die Muffe durch eine Umlenkrolle geführt und mit seinem der Öse abgekehrten Ende in einen Schlitz in einem drehbaren Aufwickelhaspel eingeführt. Die Vorspannung wird nach dem Spannen des Spannbandes dadurch erreicht, daß der Bolzen und die Umlenkrolle gegeneinander vorgespannt sind. Dies geschieht zweckmäßigerweise durch Zug- und Druckfedern. In einer besonders vorteilhaften Ausführungsform der Erfindung sind die Enden des Bolzens in je einem Langloch im Gehäuse gelagert und gegenüber dem Gehäuse mittels Tellerfedern vorspannbar.

Das Metallblech ist zweckmäßigerweise ein federhartes Stahlblech. Durch diese Werkstoffauswahl ist eine gleichmäßige Druckverteilung besonders gut erreichbar.

Damit der Druck auf das Kunststoffband auch in unmittelbarer Nähe der Enden des Metallbleches aufgebracht werden kann, sind die einander überlappenden Enden des Metallbleches angefast. Ebenso wie das Metallblech im Bereich der Umfangsnaht besteht auch das Druckverteilungsblech aus federhartem Stahl. Bei dem Druckverteilungsblech sind zweckmäßigerweise die in Richtung der Überlappungsnaht verlaufenden Kanten angefast.

Insbesondere bei Muffen mit einer großen Ausdehnung in Richtung des Rohrleitungsverlaufes hat es sich als sinnvoll erwiesen, ein weiteres Spannband vorzusehen, welches vorzugsweise mittig zwischen den auf den Enden des Kunststoffbandes liegenden Spannbändern angeordnet ist.

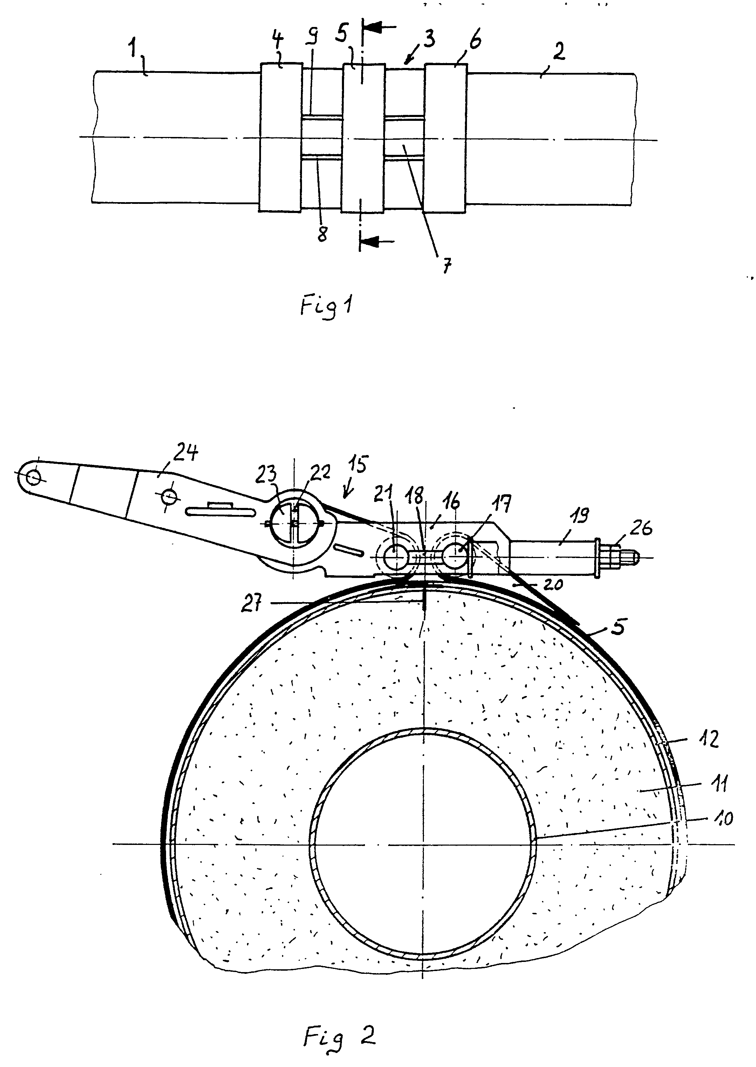

Die Erfindung ist anhand der in den Figuren 1 und 2 schematisch dargestellten Ausführungsbeispiele näher erläutert.

Die Figur 1 zeigt eine Ansicht einer Muffenverbindung zwischen zwei Fernwärmerohren 1 und 2. Nachdem in nicht dargestellter Weise die Innenrohre der Fernwärmeleitungen 1 und 2 verbunden sind, wird um die Verbindungsstelle ein Kunststoffband 3 zu einer Muffe mit überlappenden Bandkanten geformt. Zwischen den Enden der Außenrohre der Fernwärmeleitungen 1 und 2 und auch zwischen den einander überlappenden Bandkanten befindet sich ein Heizleiter, welcher bei Stromdurchgang die zu verschweißenden Oberflächen erwärmt.

Der für die Verschweißung erforderliche Druck wird durch drei Spannbänder 4, 5 und 6 aufgebracht, welche mit einer Kraft von in etwa 300 kg gespannt sind. Auf der Überlappungsnaht liegt ein Druckverteilungsblech 7 mit angefasten Kanten 8 und 9, welches den von den Spannbändern 4, 5 und 6 aufgebrachten Druck gleichmäßig auf die Längsschweißnaht verteilt. Unterhalb der Spannbänder 4, 5 und 6 befinden sich noch je ein Metallblech, welche das Druckverteilungsblech 7 überdecken. Die Metallbleche sind so lang, daß sie im herumgelegten Zustand an ihren Enden einander überlappen. Um die Durchmessersprünge gering zu halten, sind die Enden der Metallbleche vorzugsweise angefast. Sowohl die Metallbleche als auch das Druckverteilungsblech bestehen aus federhartem Stahl und weisen eine Wanddicke von in etwa 0,5 mm und eine Breite von in etwa 100 mm auf. Die Spannbänder 4, 5 und 6 können als sogenannte "verlorene Bänder" mittels einer handelsüblichen Spannvorrichtung aufgebracht und endseitig miteinander verbunden werden. Vorteilhaft erscheint es jedoch, eine sogenannte Ratsche zu verwenden, welche ein mit dieser verbundenes Spannband aufweist, dessen Länge so bemessen ist, daß alle zu verschweißenden Rohrgrößen erfaßt werden.

In der Figur 2 ist ein Teilschnitt durch eine Muffenverbindung dargestellt. Hierin ist mit 10 das Innenrohr mit 11 die Wärmeisolationsschicht und mit 12 der Kunststoffaußenmantel der Fernwärmeleitung bezeichnet. Im Bereich der überlappenden Bandkanten des Kunststoffbandes befindet sich der nicht näher bezeichnete Heizleiter. Der Heizleiter verläuft an drei Längskanten des Kunststoffbandes 3, die unterhalb der in Figur 1 gezeigten Spannbänder 4 und 6 und unterhalb des Druckverteilungsbleches 7 zu liegen kommen.

Oberhalb des Kunststoffbandes liegt ein um das Kunststoffband herumgelegtes Metallblech mit überlappenden Bandkanten. Das Metallblech überdeckt wie vorher beschrieben das Druckverteilungsblech. Auf dem Metallblech liegt das Spannband 5, welches mittels der Ratsche 15 vorgespannt ist. Die Ratsche 15 besteht aus einem Gehäuse 16, in dem ein Bolzen 17 endseitig in Langlöchern 18 geführt ist. Der Bolzen 17 ist gegenüber dem Gehäuse 16 beim Schweißvorgang über Tellerfedernpakete 19 vorgespannt. Die Tellerfedernpakete 19 enthalten nicht dargestellte Dämpfungselemente, welche einen Dämpfungseffekt beim Entlasten des Spannbandes 6 bewirken sollen. Der Bolzen 17 ist durch eine endseitig an Spannband 5 angebrachte Öse 20 hindurchgeführt.

Parallel zum Bolzen 17 verläuft eine im Gehäuse 16 gelagerte Umlenkrolle 21, um welche das Spannband 5 herumgeführt ist. Das Ende des Spannbandes 5 ist in einen Schlitz 22 eines drehangetriebenen Haspels 23 eingeführt. Bei Drehung des Haspels 23 mittels des Armes 24 wird das Spannband 5 auf den Haspel 23 aufgewickelt und spannt allmählich das Tellerfederpaket 19 vor. Markierungen an einem mit dem Bolzen 17 verbundenen Schaft 26 zeigen die Kraft der Vorspannung an.

Nach dem Vorspannen der Spannbänder 4, 5 und 6 wird der Heizleiter durch Stromdurchgang aufgeheizt und schmilzt die zu verschweißenden Oberflächen des Kunststoffbandes 3 bzw. der Kunststoffrohre 12. Läßt die Vorspannung der Spannbänder 4, 5 oder 6 während des Schweißvorgangs nach, kann mittels der Ratsche 15 jedes Spannband 4, 5 oder 6 für sich nachgespannt werden.

Mit 27 ist noch eine Stützschiene bezeichnet, die die Überlappungsnaht von innen abstützt.

Nach dem Verschweißen werden die Schweißnähte auf Dichtigkeit überprüft und der Ringraum zwischen dem Innenrohr 10 und der aus dem Kunststoffband 13 gebildeten Muffe im Bereich der Verbindungsstelle mit Polyurethan-Ortschaum ausgeschäumt. In der Figur 2 sind der Deutlichkeit halber der Heizleiter, das Metallblech und das Kunststoffband nicht gesondert dargestellt. Das Metallblech liegt oberhalb des Kunststoffbandes, die Heizleiter zwischen Kunststoffband und Kunststoffaußenrohr.

## Ansprüche

1. Anordnung zum Aufbringen des Drucks bei der Herstellung einer Schweißverbindung zwischen den Enden zweier Kunststoffrohre und einem um die Enden der Kunststoffrohre mit überlappenden Bandkanten herumgelegten Kunststoffband, bei der sowohl zwischen den Enden der Kunststoffrohre und dem Kunststoffband als auch zwischen den überlappenden Bandkanten Heizleiter zum Erwärmen der zu verschweißenden Kunststoffschichten vorgesehen sind, insbesondere zur Herstellung einer Verbindungsmuffe für Fernwärmeleitungen, bei welcher an der außenliegenden Oberfläche des um die Enden der Kunststoffrohre herumgelegten Kunststoffbandes in radialer Richtung eine Kraft auf die Schweißnähte ausübende Mittel vorgesehen sind, dadurch gekennzeichnet, daß zumindest im Bereich der zwischen den Enden des Kunststoffrohres (12) und des Kunststoffbandes (3) gelegene Heizleiter jeweils ein Spannband (4,5,6) um das Kunststoffband (3) herumgelegt ist, welches elastisch vorgespannt ist, daß zwischen den Spannbändern (4,5,6) und dem Kunststoffband (3) jeweils ein zum ring mit überlappenden Endbereichen geformtes Metallblech angeordnet ist und daß oberhalb der Überlappungsnaht des Kunststoffbandes (3) ein Druckverteilungsblech (7) angeordnet ist, dessen Enden von den Spannbändern überdeckt sind.

2. Anordnung nach Anspruch 1, dadurch gekennzeichnet, daß die Spannbänder (4,5,6) aus biegbaren hochzugfestem Material bestehen.

3. Anordnung nach Anspruch 1 oder 2, dadurch gekennzeichnet, daß die Spannbänder (4,5,6) mittels einer Ratsche (15) elastisch vorgespannt sind.

4. Anordnung nach Anspruch 3, dadurch gekennzeichnet, daß die Ratsche (15) aus einem Gehäuse (16) besteht, in dem ein Bolzen (17) gelagert ist, der in eine durch das Spannband (4,5,6) gebildete Öse (20) eingreift, daß das Band (4,5,6) durch eine parallel zum Bolzen (17) angeordnete Umlenkrolle (21) geführt ist, daß das der Öse (20) abgekehrte Ende des Spannbandes (4,5,6) in einen Schlitz (22) in einen drehantreibbaren Aufwickelhaspel (23) für das Spannband (4,5,6) eingeführt ist und daß der Bolzen (17) und die Umlenkrolle gegeneinander vorgespannt sind.

5. Anordnung nach Anspruch 4, dadurch gekennzeichnet, daß der Bolzen (17) und die Umlenkrolle (21) durch Zug- und oder Druckfedern (19) gegeneinander vorgespannt sind.

6. Anordnung nach Anspruch 4 oder 5, dadurch gekennzeichnet, daß die Enden des Bolzens (17) in je einem Langloch (18) im Gehäuse (16) gelagert sind gegenüber dem Gehäuse mittels Tellerfedern (19) vorspannbar sind.

7. Anordnung nach Anspruch 1 oder einem der folgenden, dadurch gekennzeichnet, daß das Metallblech ein federhartes Stahlblech ist.

8. Anordnung nach Anspruch 7, dadurch gekennzeichnet, daß die einander überlappenden Enden des Stahlbleches angefast sind.

9. Anordnung nach Anspruch 1 oder einem der folgenden, dadurch gekennzeichnet, daß das Druckverteilungsblech (7) aus federhartem Stahl besteht.

10. Anordnung nach Anspruch 9, dadurch gekennzeichnet, daß das Druckverteilungsblech (7) an seinen in Richtung der Überlappungsnaht verlaufenden Längskanten (8.9) angefast ist.

11. Anordnung nach Anspruch 1 oder einem der folgenden, dadurch gekennzeichnet, daß zwischen den an den Enden des Kunststoffbandes (3) angeordneten Spannbändern (4,6) ein weiteres Spannband (5), vorzugsweise mittig zwischen den Spannbändern (4,6) angeordnet ist.

Fig 1

Fig 2